Europäisches Patentamt

European Patent Office

Office européen des brevets

(11) Publication number: **0 204 521 B1**

# EUROPEAN PATENT SPECIFICATION

(45) Date of publication of patent specification: **23.10.91**    (51) Int. Cl.⁵: **G05D 23/24, F25B 29/00**

(21) Application number: **86304105.9**

(22) Date of filing: **29.05.86**

The file contains technical information submitted after the application was filed and not included in this specification

(54) A heating and/or cooling system.

(30) Priority: **29.05.85 GB 8513507**
**04.10.85 GB 8524478**

(43) Date of publication of application:
**10.12.86 Bulletin 86/50**

(45) Publication of the grant of the patent:
**23.10.91 Bulletin 91/43**

(84) Designated Contracting States:
**AT BE CH DE FR IT LI LU NL SE**

(56) References cited:
**DE-A- 2 836 698**
**FR-A- 2 501 837**
**GB-A- 2 161 293**
**US-A- 3 844 475**
**US-A- 4 379 483**

(73) Proprietor: **YORK INTERNATIONAL LTD**
**Gardiners Lane South**
**Basildon Essex SS14 3HW(GB)**

(72) Inventor: **Kent, Derek**
**54 Athelstan Gardens**
**Wickford Essex SS11 7EF(GB)**
Inventor: **Fry, Anthony Robert**
**53 Shakespeare Avenue**
**Rayleigh Essex SS6 8YA(GB)**

(74) Representative: **Ayers, Martyn Lewis Stanley**
**et al**
**J.A. KEMP & CO. 14 South Square Gray's Inn**
**London, WC1R 5EU(GB)**

## Description

The present invention relates to the control of the operation of heating and/or cooling systems, particularly, but not exclusively, systems incorporating heat pumps or refrigeration units.

Environmental control of, say, a building is often carried out by a number of heat pump units which exchange heat with the environmental space, whether during heating or cooling, by means of water circuit and water-to-air heat exchangers. The water is delivered to the heat pump unit by the water delivery system, heated or cooled as appropriate and then delivered to the water-to-air heat exchangers in the space to be heated or cooled.

Conventional reciprocating refrigeration machine control systems sense water temperature at the inlet connection of each machine and lead/lag selection (that is, the sequence in which the heat pumps are brought on-line) is determined by the temperature of the common system return water. When the machines are connected in parallel, at system part load, the mixed water temperature, at the common outlet of the machines, will always be outside the design requirements when operation of any machines in the system is not demanded by the lead-lag sequence controller. This loss of water temperature control can be eliminated by:

1. All machines in the system operating continuously at part load, but this results in low efficiency and high operating costs.

2. Piping the machines in series, but due to the increased water flow to the heat exchanger of each machine, the pressure drop across the units increases, resulting in a rise in required pump heat pressure and increased operating costs. Furthermore, a series flow through more than two machines usually exceeds the machine maximum flow volume limitations.

US-A-4379483 discloses a heating and/or cooling system comprising a system controller and two heating and/or cooling sources (first and second heat pumps) for delivering heated or cooled working medium, in response to a demand on the system for heating or cooling. The system controller determines whether the heating and/or cooling capacity of the heating and/or cooling sources should be changed by comparing the indoor temperature with preset reference values. Specifically, to take the case of heating as an example, an additional heating source is activated each time the indoor temperature falls below a respective preset value.

DE-A-2836698 discloses an electronically controlled water mixing device, in which the temperature of mixed cold and hot water is monitored in order to control the mixing of the hot and cold water to provide the required final temperature.

Further, the use of multistage heat pumps is well known in the field of environmental control (see, for example, US-A-4412581).

The present invention seeks to provide a heating and/or cooling system with an improved form of system controller for coordinating the operation of a number of heat pumps to satisfy a heating and/or cooling demand.

According to the present invention, there is provided a heating and/or cooling system including a system controller and at least two heating and/or cooling sources for heating or cooling working medium flowing around a circuit, in response to a demand on the system for heating or cooling, characterised in that the heating and/or cooling sources are heat pumps and having associated with it a controller for controlling the operation of the refrigeration circuit, wherein the heat pumps have working medium outlets connected in flow parallel to a delivery conduit for the heated or cooled working medium and the system controller is arranged to generate command signals to the heat pump controllers to request an increase or decrease in heating and/or cooling power depending on the temperature of mixed working medium in the delivery conduit to maintain a demanded value of the temperature of said mixed working medium, the controller of each heat pump being operative to control the heating and/or cooling power thereof and being responsive to the requests of the system controller to change the heating and/or cooling power if the operating condition of the heat pump permits and the system controller being operative sequentially to request energisation or de-energisation of the heat pumps such that not more than the minimum number of heat pumps which can satisfy the heating and/or cooling demand are energised.

The present invention may be applied to systems which can simultaneously provide heating and cooling capacity, for example 4-pipe environmental control systems where a number of heat pumps (and/or other heating and/or cooling devices) are connected in a 2-pipe cold water system and a 2-pipe hot water system. Preferably, the system controller is arranged so that for each of the hot working medium and the cold working medium (ie, usually water) circuits, the system controller is provided with a single mixed working fluid temperature sensor which monitors the temperatures of mixed working fluid in the delivery conduit from the outputs of the various heating or cooling sources.

Thus, in one specific example of the present invention, one or more heat pumps each adapted to operate in a 4-pipe configuration to provide hot and cold water simultaneously are controlled by a system controller which has single hot-water and cold-water temperature sensors and two similar control sections, one controlling the loading up of the heat pump(s) or unloading with respect to the cooling demand and the other with respect to the heating demand.

In the following, the invention will be described with reference to its application to heating and/or cooling systems using water as the working medium, and with the heat pumps being refrigeration units or other Carnot-cycle thermodynamic machines. Heating sources such as electrical heaters, gas and oil burners, coal-based heaters and so forth may be used to supplement the heating capacity.

The heat pumps may have a number of stages of capacity which are brought on-line progressively in response to as yet unsatisfied heating and/or cooling demands or the heating/cooling sources may be of a continuously variable capacity type such as, in the case of a heating pump or refrigeration unit, a variable speed screw compressor or a variable vane/speed turbo compressor.

Preferably, each of the heat pumps is a multi-stage heat pump, that is to say it has variable compressor capacity and/or heat exchanger capacity and the system controller is arranged to demand increases or decreases in overall heating and/or cooling capacity of the heat pumps, these otherwise operating independently of one another under the control of individual controllers. These controllers may maintain the associated heat pumps water outlet temperature within specified limits and control other functions required for the efficient running of the heat pump, such as initiating defrost cycles for outdoor heat exchanger coils.

The system controller may be arranged so that when it detects that there is insufficient on-line heat pump or water chiller capacity to satisfy a demanded mixed hot- or cold-water temperature, then if the heat pump or pumps or water chillers currently on line is/are loaded to full capacity, a further heat pump or water chiller is brought on-line at part load capacity, while if there is a unit already operating at part load capacity, that unit is commanded to increase its capacity. If that increase in capacity fails to meet the demand, further stages of that heat pump can be commanded on-line and, if that fails, the next heat pump in the sequence brought onto line. This manner of operation has the advantage that it automatically takes account of individual units temporarily being off-line, for example, because they have initiated a defrost cycle under the control of their individual control units.

The invention will be further described with reference to the accompanying drawings in which:-

Figure 1 shows an environmental control system incorporating a number of heat pump units and embodying the present invention.

Figure 2 is a block diagram of one of the two sections of one form of system controller for use in an embodiment of the present invention.

Figure 2A shows schematically a system according to a further embodiment of the present invention.

Figures 3A to F are a circuit diagram of the main circuitry of the controller of figure 2.

Figure 4 is a circuit diagram of the interface circuit of the controller of figure 2.

Figure 5 is a perspective view of a simplified heat pump system.

Figure 6 is a diagram, corresponding to figure 1, of an environmental control system according to the present invention.

Figure 7 is a circuit diagram of a command interpreter for use in the present controller.

In the following, the invention will be described with reference to its application to the control of heat pumps used to provide heated or cooled water to a building heating/cooling system, but it will be apparent that the invention is equally applicable to the control of heating-only and cooling-only systems (eg, incorporating water chiller heat pumps).

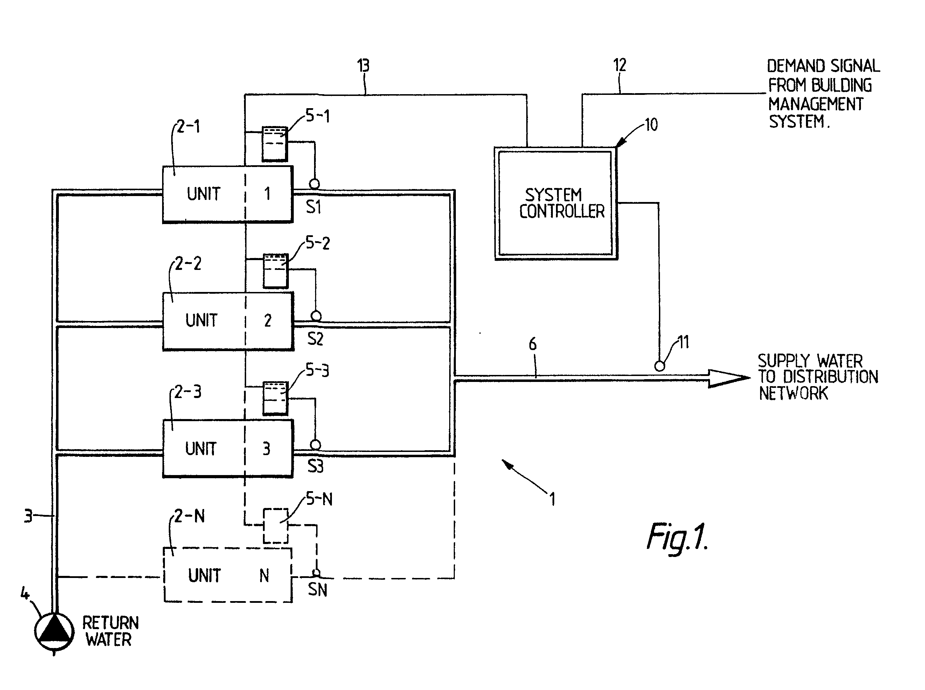

Figure 1 shows an environmental control system 1 comprising a number of reversible heat pump units 2-1, 2-2, 2-3, ..., 2-n whose refrigerant circuits are in heat exchange relationship with water from a two-pipe building heating/cooling system. Return water is delivered by return water pump 4 to the water-refrigerant heat exchangers of the heat pumps. As will be seen from figure 1, the water circuits units 2-1, ..., 2-n are connected in parallel and deliver heated or cooled water, depending on the operating mode, via pipework 6 for distribution to heat exchangers within the environmental space which is to be controlled.

Each of the heat pump units 2 incorporates a control unit, 5-1... 5-n, which monitors the water delivered from the outlet of that heat pump unit. Subject to a load-up/unload demand signal from a system controller 10, the units 2 operate autonomously, under control of their individual control units 5. These control units limit the maximum and minimum water outfeed temperatures appropriately depending on whether heating or cooling is required and initiate evaporator defrost cycles as and when necessary.

In a manner which will be described in more detail below, a system controller 10 monitors the mixed water from the outputs of the heat pump 2 by means of a temperature sensor 11 associated with the mixed supply water conduit 6. The sensor 11 may be a thermistor or any other suitable form of temperature detector providing a temperature-indicating electrical signal. The system controller 10 may also receive a mixed-water demand temperature signal via a line 12 from an electronic building management system, (this latter being not shown as it does not form part of the present invention) and issues control signals via line 13 to the controllers 5 of the heat pumps 2 in accordance with the error between the sensed and demanded supply water temperatures.

It will be appreciated that with units 2 which have a stepwise increase in capacity, for a given infeed temperature, in the steady state there are a number of discrete mixed water outlet temperatures, corresponding to the number of steps in capacity. Where a finite temperature is necessary, obviously units having continuously variable capacity e.g. variable vane turbo compressors or speed-controlled screw compressors could be used.

Although the heat pump units 2 need not be identical (and indeed this is one of the advantages of the system controller in accordance with the present invention), preferably they are of similar types and capacity. One particularly suitable form of unit is the changeover heating/cooling heat pump manufactured by York International Limited; as this is a commercially available unit, it need not be described in detail here.

Preferably each heat pump unit has several stages of load capacity which can be brought on line in succession in accordance with an increasing heating or cooling demand for the water to be supplied via delivery conduit 6. Thus, as in the case of the York changeover heating/cooling heat pump, the heat pump unit may have a multi-stage, e.g. multi-cylinder compressor and/or it may have multi-stage water/refrigerant heat exchange units. It should be noted that in the case of the "York International changeover heating/cooling heat pump, and other similar units, the control unit 5 incorporates a timer which gives a time-dependent response to a load or unload command. Thus during loading up, when an extra cylinder is brought on line, the load-up signal must persist for a suitable predetermined period before the next stage is brought on line. Likewise the timer ensures that an unload signal must persist for a similar time period following one stage of unloading before the next stage is unloaded.

For the purpose of facilitating an understanding of the circuitry of the system controller 10, a brief description of the overall operation of the system 1 will now be given, although a more detailed description is given below.

Essentially, the system controller 10 monitors the supply water demand temperature manually preset or on line 12 from the Building Management System and controls the operation of the heat pump unit 2 so as to get an acceptably close approximation to the required supply water temperature through the pipework 6 as detected by sensor 11. When there is a detected shortfall in heating or cooling output (i.e. when the water in pipework 6 is undertemperature when building heating is required or overtemperature when building cooling is required) the system controller 10 issues control signals to the control 5 of the heat pump units 2 to get them progressively to load up to increase the heating or cooling output as appropriate. First, one stage of the first heat pump unit 2-1 is brought on line, then the next stage and so on until the first heat pump unit is at full capacity and this process is repeated successively for further heat pump units 2-2,..2-N until the heating or cooling demand is met; if a heating demand cannot be met by all the units working at full capacity, the system controller 10 can activate a bivalent heat source to provide supplementary heating. When the heating or cooling output exceeds demand, the heat pump units are progressively unloaded in the reverse manner.

The system controller 10 can be arranged so that it is not always the same heat pump unit which is loaded up first, so as to equalise wear between the different heat pump units.

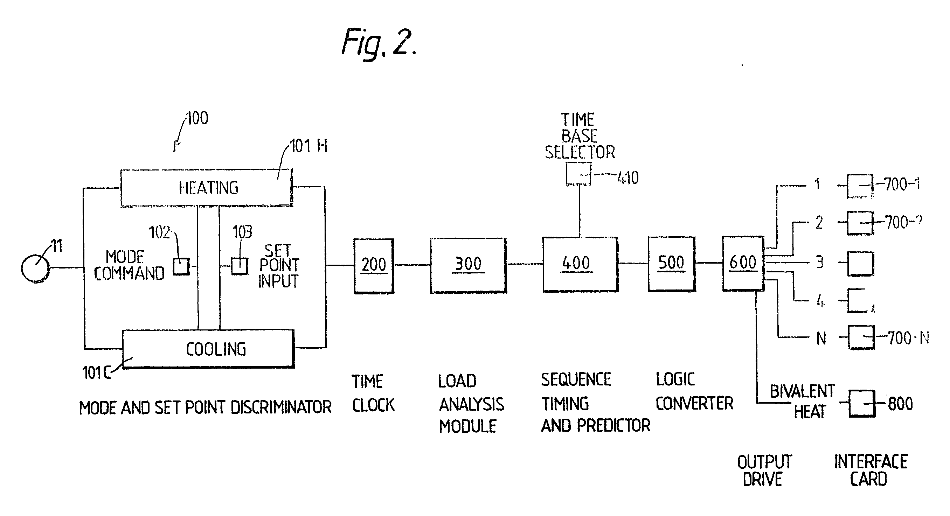

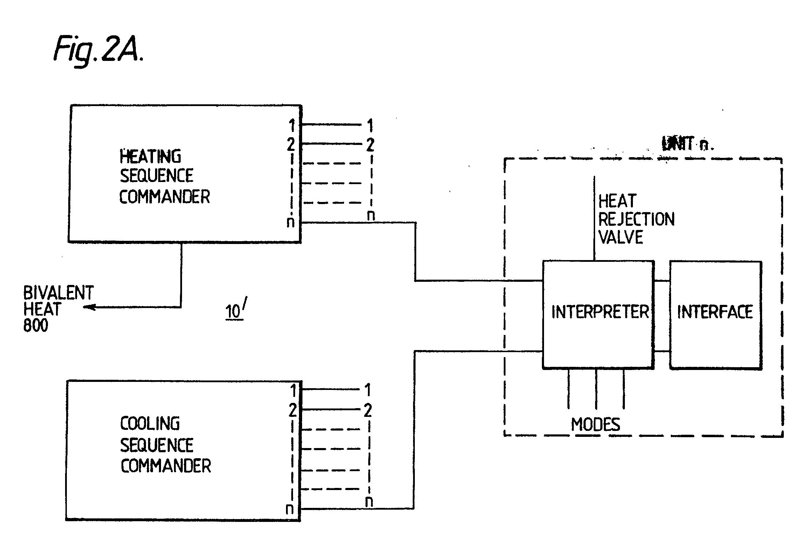

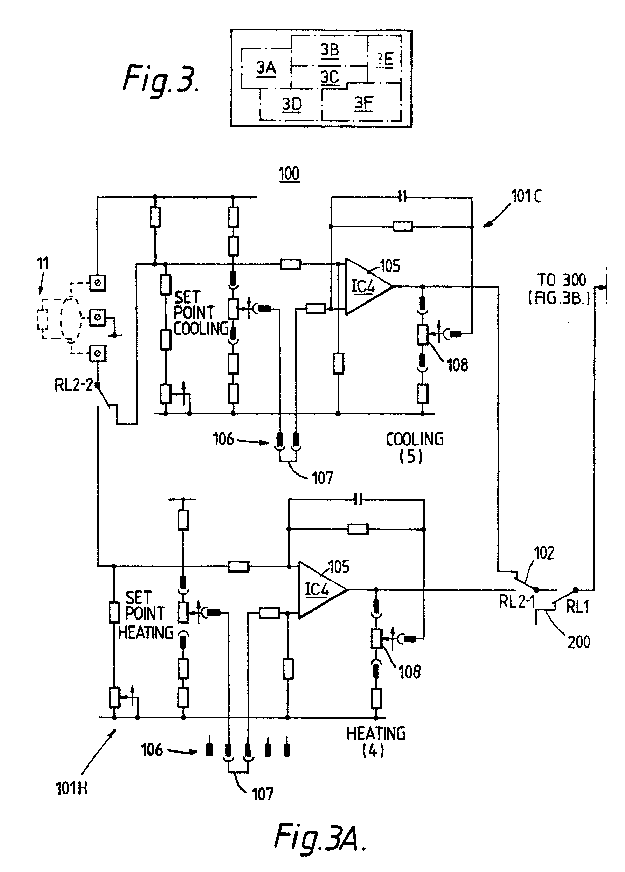

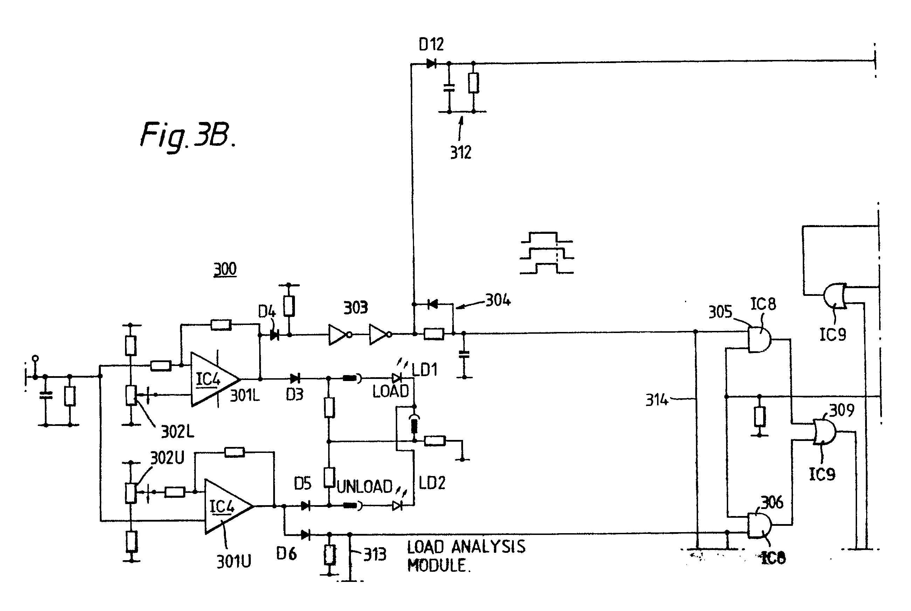

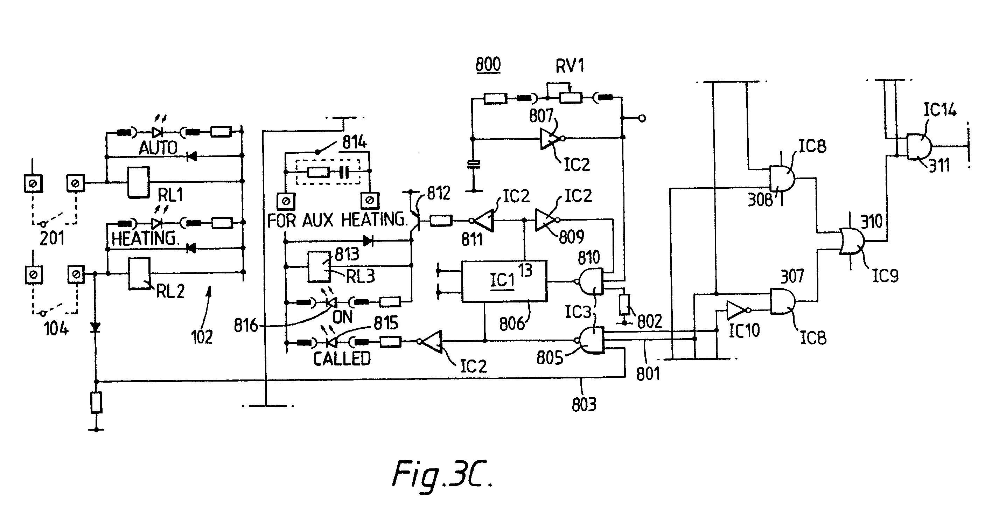

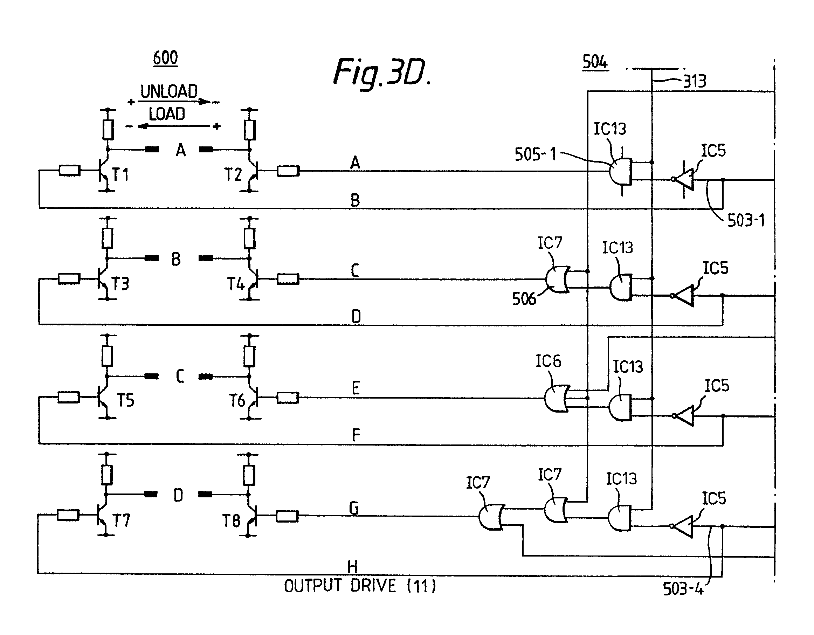

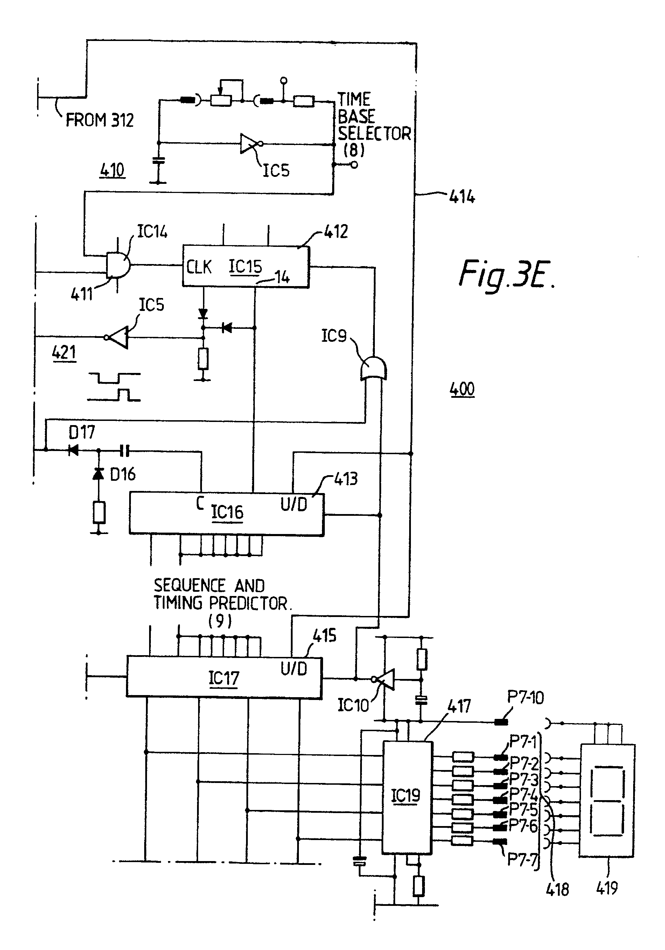

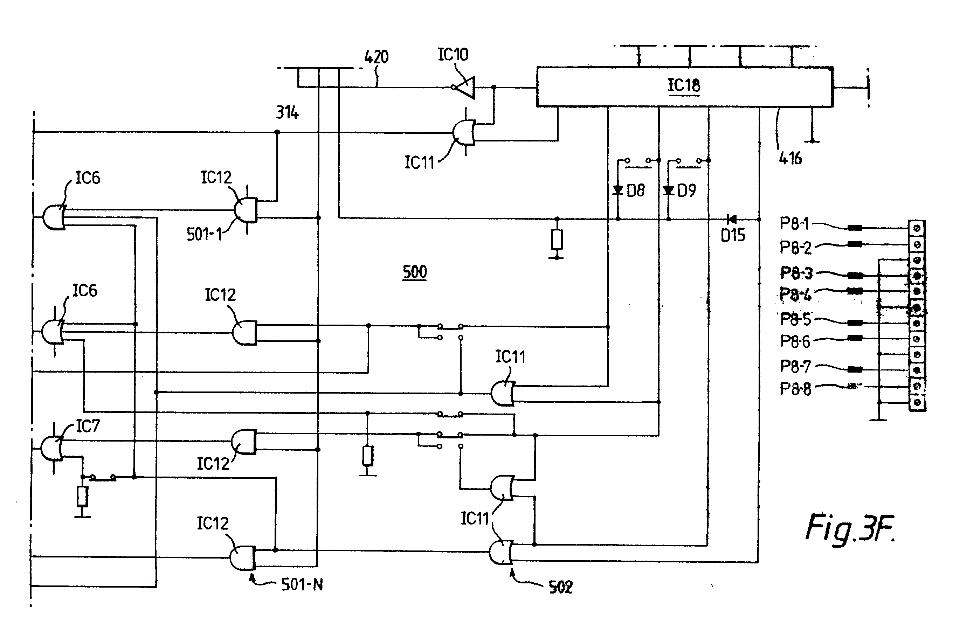

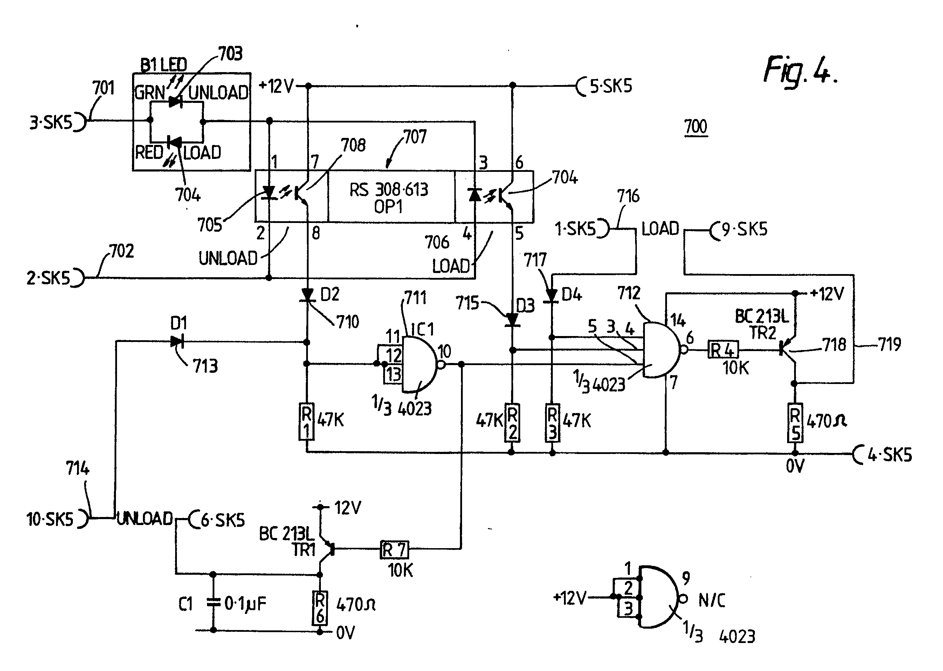

The system controller 10 is shown in block form in Figure 2 and the actual circuitry in Figures 3 and 4. Referring first to Figure 2, the output from the sensor 11 is applied to mode and set point discriminator circuitry 100 which has signal processing circuitry 101H for heating and 101C for cooling, and mode command (heating/cooling) and set-point inputs 102, 103, respectively. It is to the set-point input 103 that the signal on line 12 in Figure 1 is applied. The discriminator circuitry 100 generates a signal proportional to the difference between the demanded and set point temperatures and applies this via a time clock interruptor 200 to a load analysis circuit 300. The time clock interruptor 200 interrupts the demand signal in accordance with the on and off periods settings of a time-of-day clock so that the system can be programmed for a daily on/off cycle of operation.

The load analysis module 300 responds to the deviation between the sensed and set point water temperature signals and generates signals to command the heat pump water chiller units to load up or unload in accordance with the changing deviation between the set point and actual water temperatures. The signals from the load analysis module 300 are applied to a sequence timing and predictor circuit 400 which processes the signals from the load analysis module 300 and generates further signals which determine the actual timing sequence in which the heat pump/water chiller units are caused to load up and load down; this section incorporates a timer which simulates the behaviour of the timer in control unit 5 so that the controller tracks the responses of the units 2 and thereby optimises the demands which it makes on them. A time base selector circuit 410 associated with the circuit 400 enables the rate of response of the system to be adjusted.

Logic converter circuitry 500 processes the outputs from the sequence timing and predictor circuitry 400 and translates these into signals appropriate to control output drive circuitry 600 which distributes appropriate drive signals to the end heat pump units and to control a bivalent heat source by means of interface circuits 700-1... 700-N and a bivalent heat module 800.

As mentioned above a bivalent source of heat may be provided to cover a shortfall in heat pump heating capacity so that it can be activated if the heating demand in a particular circumstance is not being adequately met with all the heat pump units fully loaded up. Obviously the heat module 800 is isolated when in the cooling mode.

Figure 3 shows the main part of the circuitry of the system controller 1.

A time clock switch 201 operated by the time-of-day clock controls a relay coil RL1. A mode switch 104 of Mode Command 102 controls a relay coil RL2. Associated with the relay coil RL2 are relay contacts RL 2-1 and RL2-2 which determine, in accordance with the setting of the mode switch 104, whether the heating or cooling section 101H/101C of the discriminator circuitry 100 is applied via the time of day relay contact RL1 to the load analysis module 300.

It will be seen from Figure 3 that each of the sections 101C, 101H comprises an operational amplifier 105 which is connected so as to deliver to the associated pole of the relay contacts RL 2-1 a signal proportional to the difference in the temperature as detected by the temperature sensor 11 and a set-point signal applied to the inverting input of the operational amplifier in the cooling section and the non-inverting input of the operational amplifier in the heating section. As shown, in both the heating and cooling sections, this signal is derived from the wiper of a potentiometer connected in a resistive divider chain between one of the supply rails and ground. This configuration is provided by a wire link 107 across terminal block 106 and allows the set-point to be set manually. For automatic setting, a demanded temperature signal from a Building Management System via an analogue interface may be applied to the discriminator 100 as an offset from the discriminator's internally-set heating and cooling preset temperatures; in that way the signal derived from the temperature sensor 11 can be compared with a dynamically varying signal from the building management system. A control potentiometer 108 is provided to vary the overall gain of each of the discriminator sections and, thereby, the dead-band of the system, by varying the error gain in relation to a "deadband window" defined by the following section 300.

In operation, the output from the selected one of the heating and cooling sections 101 is applied via the relay contacts RL2-1 and RL1-1 to the input of the load analysis module 300. This has two sections 301L and 301U comprising comparators which compare the detected temperature error signal with reference values picked up at the wiper of preset potentiometers 302L and 302u and are used to generate signals indicating whether loading or unloading of the heat pumps is required. The output of the operational amplifier 301L is applied via a diode D4 to series connected Schmidt trigger integrated circuits 303 to a resistor capacitor combination 304, which is in turn connected to one input of AND gate 305; the signal at this input goes "high" when loading up is required. The output of the other comparator 301U is connected via a diode D6 to an input of a further AND gate 306; the signal at this input goes "high" when unloading is required. The outputs of both operational amplifiers 301 are applied via D3 and D5 to two diodes LD1 and LD2 which illuminate when the outputs of the operational amplifiers 301L and 301U go high, indicating loading or unloading, respectively. Illumination of LD1 and LD2 will not occur if the system is in the dead band.

The two operational amplifiers 301L and 301U are thus used to compare the current error signal with respective reference values to establish whether loading or unloading commands for the heat pump units are to be generated. It will be appreciated that the reference levels are suitably set so that loading and unloading commands cannot be generated simultaneously.

The output from the RC network 304 is also connected to one input of an AND gate 307 while that from the output of operation amplifier 301U is also applied to AND gate 308. The AND gates 305 and 306 have their other inputs connected together to be controlled by an output from the sequence timing and predictor circuitry 400. The AND gates 307 and 308 also receive separately derived signals from the sequence timing and predictor circuitry 400.

The outputs of the AND gate 305 and 306 are combined by an OR gate 309, while those of AND gates 307 and 308 are combined by an OR gate 310. The outputs from these two OR gates are applied as the two inputs to a 2-input AND gate 311 whose output is used to provide a control signal to the circuitry 400; specifically the pulses which make up this signal are counted by an up/down counter 415 in the circuitry 400.

It will be seen that the sequence timing and predictor circuitry 400 comprises a time base selector 410 which is a free running pulse oscillator incorporating a potentiometer to enable the pulse repetition frequency to be determined. The pulse stream from the time base selector 410 is applied via an AND gate 411 to the clock input of a 14-stage binary ripple counter 412. The output of the 14th stage of the ripple counter is applied to the clock input of a presettable binary up/down counter 413 whose up/down input is controlled by the signal on line 414. The signal on line 414 is determined by the output of the Schmidt trigger network 303 to which it is connected via a diode D12 and a parallel resistor/capacitor combination 312 (this, and RC combination 304 are provided to slug the output signals to the circuitry 400 so as to give the circuitry 400 time to respond following a change in the load and unload signals from circuitry 300).

The circuitry 400 also incorporates a second presettable binary up/down counter 415 whose up/down count control input is also controlled by the signal on line 414. Counter 415 counts pulses at the output of the AND gate 311 which, it will be recalled, goes high when the outputs of OR gates 309 and 310 are high simultaneously.

The four outputs of the up/down counter 415 are applied to a BCD-to-decimal decoder 416 and to a binary coded decimal 7-segment decoder/driver integrated circuit 417 which can be used to provide a number of parallel outputs at 418 to a visual display card 419.

Broadly, the count stored by the up/down counter 415 represents the number of heat pumps which should be on line at any one time. The parallel outputs of this counter are translated by the BCD-to-decimal decoder 416 into a one-of-ten output. As shown, for four heat pump units, four of the outputs of the decoder 416 are used, the one which is "high" at any particular time indicating which of the four units is the current capacity controlled unit, that is, the unit which is currently selected for loading or unloading.

An output on line 420 from decoder 416 stops the counter 415 from counting below zero, while a signal on line 312 stops the count exceeding the number of heat pump units available.

A signal from the carry output of the up/down counter 413 is fed back to the second inputs of the AND gates 305 and 306 so that the output of the OR gate 309 goes high when

(a) a "load" signal is present and the counter 413 produces a carry pulse; or

(b) an unload signal is present and the counter 413 produces a carry pulse.

The function of the AND gate 311 is to provide pulses to be counted (in a direction dependent upon the state of the signal on line 414) when:-

(1) a "load" signal or an "unload" signal is present; and

(2) a clock pulse is present; and

(3) the system is not at a limit of capacity (top stage when loading up, all stages off when unloading).

The counter 413 which produces the clock pulses produces a clock pulse, say, once every 200-1600 seconds. The counter 413 counts up or counts down depending on whether unloading or loading is demanded and is used to track the behaviour of the timer of the individual unit controller 5 in whichever of the control units has been sent the most recent load or unload signal. To this purpose, the counter 413 counts pulses derived from the binary ripple counter 412 which has count enable/disable circuitry generally designated 421 associated with it which enables counting to start when a load or unload signal occurs and, when that signal is removed, the counter 412 is allowed to continue counting to the stage where it is just about to deliver a clock pulse to the up/down counter 413.

The logic converter 500 essentially takes the four parallel outputs from the decoder 416 of the sequence timing and predictor circuitry 400, processes them and uses them to generate control signals which are used to control the four parallel output circuits of the output drive circuitry 600.

It will be seen that each of the four channels of the logic converter 500 includes an AND gate, 501-1 ... 501-4, one input of each of which is connected to the output of the RC circuit 304 in the "load" section of the load anaylsis module 300, and the other of which is derived from a respective one of the outputs of the decoder 416 by circuitry generally designated 502.

The outputs appearing on lines 503-1 ... 503-4 are applied directly to one of the two control inputs of each of the four parallel sections of the output drive circuitry 600. The other inputs to these parallel sections are derived via gated circuitry generally designated 504. These inputs are enabled by the signal on line 313 which is the "unload" signal from the operational amplifier 301U. For the channel A, it will be seen that the control signal is obtained direct from the AND gate 505-1, while for channel B, the output signal is obtained via OR gate 506 which receives the output from an OR gate 507 connected to one of the outputs of decoder 416.

The circuitry 504 is arranged so that depending on the state of the signals on lines 313, 314 and the four parallel outputs of the sequence timing and predictor circuitry 400, the output channels are activated in the "load" or "unload" sense if there is an as yet uncorrected temperature error.

Switches 508 are set in an appropriate open/closed configuration depending on the number of heat pump units available and the settings of these switches determine when the signal on line 314 changes state to indicate that maximum available capacity has been reached. It is envisaged that the signal on the line 314 could also be used as a signal to indicate that a bivalent heat source should be activated in the heating mode when the available heat pumps have reached their full capacity and there is still a heating demand. Further switches, generally designated 509, modify the processing of the four parallel outputs of the decoder 416 by the logic converter 500 to compensate for differing numbers of available heat pumps.

It will be seen that each of the four sections of the output drive circuitry 600 comprises two transistors such as T1 and T2 in channel A. These act as a bridge, with the voltage difference between the collectors of the two transistors indicating whether loading or unloading is required. The reason for this bi-directional signal will become apparent from the description below of the heat pump interface card.

The output device circuit 600 may be connected to the interface cards for individual heat pumps via a wire jumper set or plug board 603 so as to enable the association between the heat pumps and the output channels of the controller 10 to be varied e.g. so as to equalise wear between the heat pumps.

As mentioned above, the system controller 10 may control the operation of a bivalent heat source so as to have the capacity to deal with a heating load in excess of the heating capacity of the heat pump units.

Figure 4 shows one of the interface circuits 700.

The two input connections 701 and 702 are connected across the bridged output of the respective channel of the output drive circuit 600. It will be recalled that the polarity of this output is indicative of whether the associated heat pump should load up or unload. The signal being zero indicates that the associated heat pump should maintain its present state.

Two light emitting diodes 703 and 704 which are of different colours are connected in opposite polarities in parallel with one another, and together are connected in series with the parallel combination of the light emitting diodes 705 and 706 of a twin-channel opto-coupler 707. It will be seen that the light emitting diode 705 and 706 are also of opposite polarities so that one will be illuminated, thereby turning on the associated photo transistor 708 or 709 of the opto-coupler depending on the existence of and polarity of the signal applied across the inputs 701 and 702. The "unload" output is applied via diode 710 to the inputs of a NAND gate 711. The three inputs of this gate are tied together so that it acts as an inverter and its output is delivered to one input of a further NAND gate 712. The "unload" signal line of the individual controller 5 is broken out and delivered to input 714 of the interface card and the combined "unload" signal is delivered back to the break-out point via socket 720. The unload command for the individual unit controller 5 is thus logically "ORed" with the unload command from system controller 10 to generate an unload signal to be returned to the unit controller; the "OR" function is used to enable the individual unit controller 5 to retain control within operating limitations.

Similarly the "load" signal line of the unit controller 5 is broken out and applied to socket 716. This signal which is indicating that individual unit capacity is still available is "ANDed" with the load signal from the phototransistor 704 by AND gate 712. Gate 712 controls output transistor 718. "Load" signals must be present from the individual unit controller 5 and from the system controller 10 for the output transistor 718 to produce a "load" output signal. This signal is returned to the unit controller 5 via socket 719 connected to the emitter of transistor 718.

In Figure 3C is shown the bivalent heat module 800. It has a control input 801 connected to a terminal on line 314 in the system controller 10 so as to sense when the heat pump has reached the limit of its capacity, and a further control input 802 which receives a load up signal from the load section of load analysis module 300 and a third control input 803 which receives a signal from the system controller indicating that operation is in the heating mode. These are applied to an AND gate 805.

When all of these inputs are high, indicating that bivalent heating is required; the output of the AND gate goes high. The AND gate 805 is connected to the reset input of a 14-stage binary ripple counter 806. A clock pulse generating circuit 807 provides a pulse signal, whose repetition rate can be adjusted by means of potentiometer RV1 to the clock input of the counter 806. When the output from the 13th stage of the ripple counter goes high, the application of further clock pulses is inhibited by the signal from the 13th stage being inverted by means of an inverter 809 and fed back as an inhibiting signal to AND gate 810. At the same time, a further inverter 811 is used to turn on a transistor 812 which in turn energises a relay coil 813 closing the contacts 814 and so activating the bivalent heat source. Two light emitting diodes of other display devices 815 and 816 may be provided, the first being connected in the circuitry at a position where its being illuminated will indicate that the bivalent heat source has been called upon, while the device 816 will indicate that the bivalent heat source has actually been activated.

It will be appreciated that if the output of the AND gate 805 goes low before the 13th stage output of the counter 806 changes state, the counter will be reset. This, of course, provides a time delay, whose duration can be adjusted by varying the frequency of the pulses counted by counter 806 using the potentiometer RV 1 so that the bivalent heat source is only brought into operation when the excess heating demand has persisted for a predetermined period of time.

System Operation

The system controller 10 registers the mixed water temperature in conduit 6, compares this with the set-point and establishes whether loading up or down is required.

The controller 5 of each heat pump 2 is set to maintain capacity step loading within the operating limits of high and low water safety temperature when in the heating or cooling mode respectively, the outlet temperatures being monitored by sensor S1, S2...SN. In heat mode the maximum water temperature is, say, 52°C (125°F) while in the cooling mode, the minimum water temperature is, say, 4.5°C (40°F)

When the temperature sensor 11 indicates that the water temperature is outside the set-point dead-band and an increase in capacity is required, a load signal is transmitted to the lead unit 2, say the unit 2-1, as set by the lead-lag sequence determining logic of the system controller. The unit 2 will either load sufficiently to satisfy the system controller 10 set point or to the normal operating limit set by the unit 2 integral controller 5. If the system controller 10 set point is not satisfied in a predefined time period, a continued load signal will be transmitted to the next unit 2 in the lead-lag sequence. This control logic permits the lead unit 2 to operate at full load and the lag unit 2 at part load ensuring the maximum operating efficiency of the overall system. This logic will prevail irrespective of how many units are involved or even whether they are mix-matched capacity wise.

When the system controller 10 exit water temperature sensor 11 indicates that the temperature is outside the set-point dead-band, a reduction in capacity is required so an unload signal is transmitted to the lag unit 2 operating in the lead-lag sequence. The unit 2 will either unload sufficiently to satisfy the system controller 10 set point or will fully unload. If the system controller 10 set point still remains unsatisfied after a predetermined time period an unload signal will be transmitted to the next lag unit 2 in the lead-lag sequence.

The system controller 10 will thus co-ordinate the capacity steps of the unit 2 to give the effect of a multi-set controller while allowing each unit's integral controller 5 to take control at the point when its normal operating limits are reached.

In the event that any unit 2 reduces the water temperature at the outlet of the cooler to its minimum level i.e. in cooling mode 4.5°C (40°F) then that unit 2 will unload itself such that freezing within the cooler is inhibited.

The system controller 10 will then increase the loading on another unit that has not achieved the operating limitation in order to satisfy the mixed leaving water sensor required temperature.

Sensors S1, S2, S3 and SN of each individual unit are providing leaving water temperature limitations of 4.5°C minimum when in the cooling mode and 52°C when in a heating mode.

The system controller 10 dictates the loading sequence of units in parallel and the individual unit inherent compressor loading sequence when within its own limitations, which may involve multi-cylinder loading in the case of reciprocating compressors and speed/vane positioning in the instances where turbo compressors are used.

When in the heating mode the system controller 10 will load up the units 2, now operating in the reversed cycle mode, increasing the load in order to raise the temperature of mixed leaving water up to the temperature demanded by the set point of sensor 11. Each unit can contribute heat in sequence until the individual unit limit of 52°C leaving water temperature is achieved when individual unit unloading will take place so as not to exceed this maximum temperature limit.

If a heating demand is not achieved with all units on full load then an additional output signal will initiate the bivalent heat source automatically.

When in the heating mode of a cooling/heating unit which may be a reverse cycle changeover heat pump, the use of an air cooled coil used as an evaporator will necessitate occasional defrosting. Each individual unit control panel has a defrost initiation and termination circuit which will operate automatically when coil defrost is required. To achieve this the unit will reverse cycle, cooling the water that is required to be heated.

The defrost demand overrides the full system heating demand and will reverse the cycle until defrost of the outside coil is satisfied. During this operation the system controller 10, in response to the effect of reducing the temperature of the mixed leaving water, will increase the loading of the other units in the parallel circuit such that the mixed leaving water temperature is maintained at the demanded level.

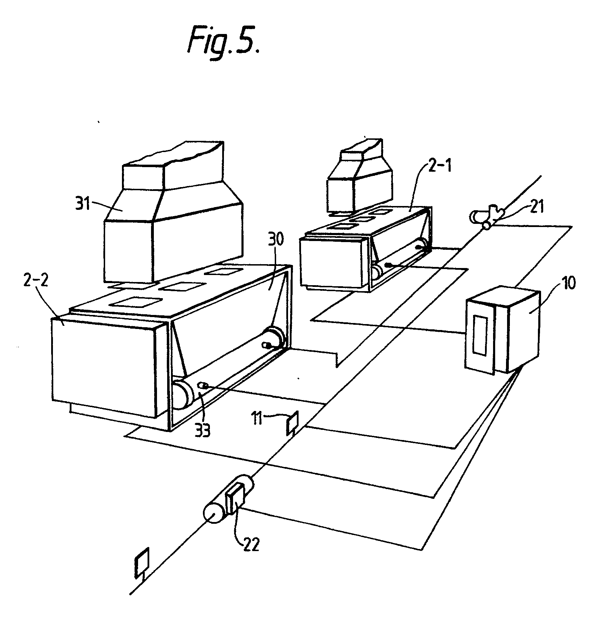

Figure 5 is a somewhat schematic perspective view of a simplified version of the heat pump system of Figure 1 having two heat pumps, 2-1 and 2-2 connected in parallel in a water supply circuit generally designated 20. Water is caused to flow in this circuit by means of a pump 21 and the additional, bivalent heat source is provided by means of an in-line electrical heater 22 which is under the control of the system controller 10. As will be seen, each of the heat pumps 2 has a V-form refrigerant-to-air heat exchanger 30 which, if located within the building, is connected to ducting 31 which conducts air from the building space to the outside. Air flow is controlled by means of controllable dampers (not shown) within the heat pump unit 2. The heat pump unit also includes a refrigerant to water heat exchanger 33.

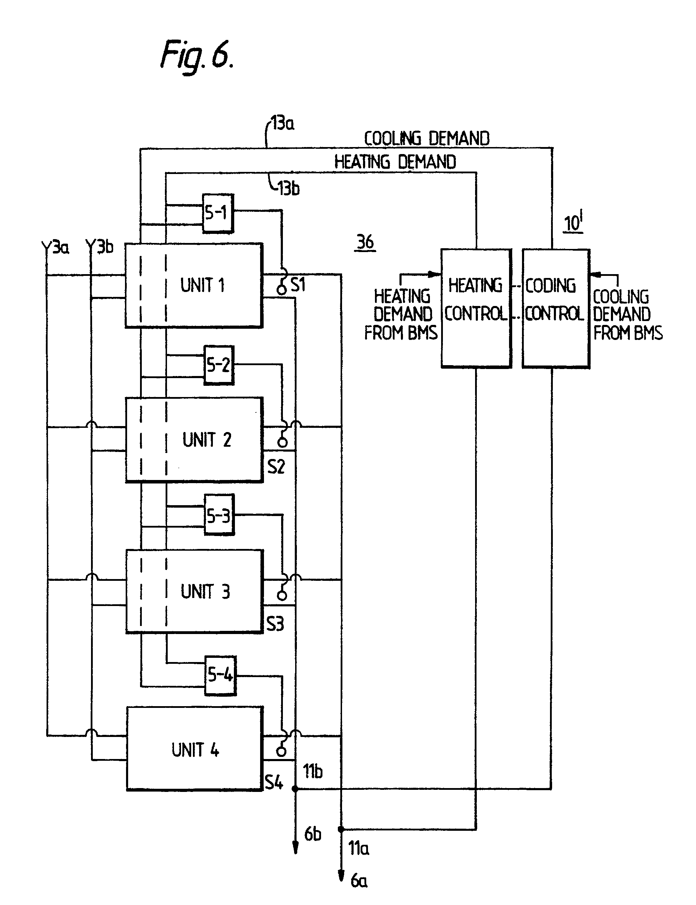

Figure 6 is a diagram, corresponding to Figure 1, of an environmental control system according to this invention, which is based on a 4-pipe system, i.e. a system where there are hot-water delivery and return pipes and cold-water delivery and return pipes so that the system can simultaneously satisfy both heating and cooling demands, by means of air/water heat exchangers, in the hot and cold water circuits.

The system 1' is, it will be seen, similar in layout to Figure 1 except that a number of components of the system are duplicated to take account of the fact that it is a 4-pipe rather than a 2-pipe system. The elements, including pipework, associated with the heating demand, are shown with a subscripted "a" while those associated with the cooling demand are shown with a subscripted "b". Thus, it will be seen that there is a hot-water return pipe $3_a$ and a cold-water return pipe $3_b$, hot water and cold water delivery pipes $6_a$ and $6_b$ with associated mixed water temperature sensors $11_a$ and $11_b$ providing temperature-indicating signals to the system controller 10' and that this system controller 10' will also accept heating and cooling demand or temperature reset signals on lines $12_a$ and $12_b$ from a building management system.

The system controller 10' comprises two substantially identical sections, each performing the function of the system controller 10 of Figure 1, but with one dedicated to satisfying the heating demand and one, to the cooling demand.

Each of the heat pump units 1..4 may be similar to one another and be adapted to provide cooling, optionally with heat recovery and heating functions. Preferably, they are each of a type such as the multi-mode heat pump manufactured and marketed by York International under the name "ENERGYPAK". These are well known, commercially available, units and so will not be described in detail here. For present purposes, it is sufficient to mention that they are multi-mode heat pumps having cold water/refrigerant and hot water/refrigerant heat exchangers and air to refrigerant heat exchangers. The two primary modes of operation are heating and cooling with the option of heat recovery whilst in the cooling mode. In the cooling mode, the heat pump unit cools water in the cold-water circuit and rejects this heat either to water in the hot-water circuit and/or to outside air via the refrigerant/air heat exchanger. Where the heating demand exceeds the cooling demand, it is also possible to extract heat from the air using the air/refrigerant heat exchanger as an additional source of energy.

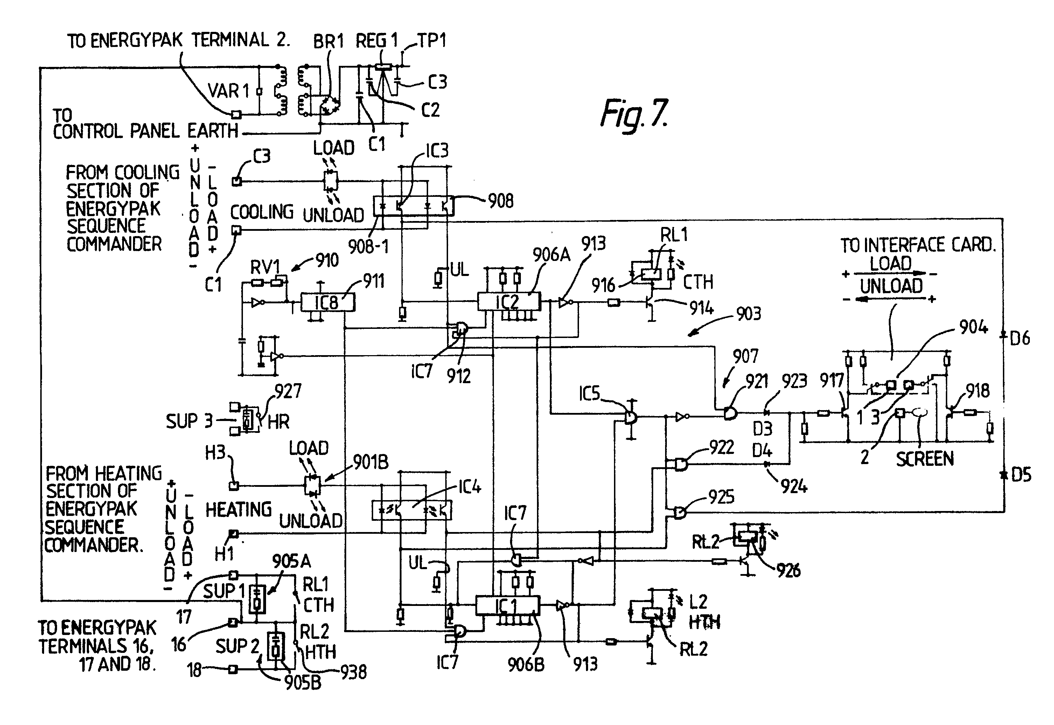

Each of the two sections of the system controller 10' may be as shown in, and described with reference to, Figures 2 to 4, but with the modification that the mode and set point discriminator 100 is set so that one section is associated with heating and the other with cooling, as described above and shown schematically in Figure 2A. The controls 5-1..5-n associated with heat pump units 1 to 4 are each provided with an interface circuit generally as shown in Figure 4 and an interpreter circuit as shown in Figure 7.

Figure 7 shows one form of command interpreter circuit 900 which may be used with the present system controller.

It has two input channels, 901a and 901b to which loading/unloading signals from the cooling and heating sections, respectively, of the system controller are applied. The signals on these channels are processed by circuitry generally designated 903 to generate a polarity dependent load/unload signal at terminals 904 which is applied to the load/unload command input of the associated heat pump interface card and to cause closure or otherwise of relay contacts 905a and 905b which are connected to the control inputs of the associated heat pump. To select the mode of operation (cooling, heat recovery or heat pump) of that unit.

As the circuitry in the two channels is generally similar, only that associated with the "a" i.e. cooling, channel will be described.

The polarity of the signal applied across the input 901a, 901b activates one of two optocouplers 908-1 and 908-2, 908-1 being activated by a loading command and 908-2 being activated by an unload command.

The counter 906 is a multi-stage binary counter, conveniently, for the purposes of this implementation, a type 4516, 4 bit up/down counter wired so that it is permanently in the count-up mode. On power up of the circuit, 906 counter is loaded with a preset value, in this case one in which the three low-order bits of the count are zero and the fourth, higher-order bit is 1. This ensures that relay 916 is de-energised at power on. A load command activating the optocoupler 908-1 resets the contents of this counter. Output Q3 of 906A goes low and is inverted by 913 to turn on transistor 914. 914 turning on energises 916 relay and closes its contact 905A to signal to the heat pump the need for cooling. A clock generator circuit 910 uses a 4020 type multi-stage ripple counter 911 to produce a series of pulses at adjustable intervals. These clock pulses are AND-ed by AND gate 912 with firstly, the output of photocoupler 908-2 which goes high when there is an unload command present, and secondly, the output of an inverter 913 connected to the output of the fourth stage of the counter 906a. Having been reset by the optocoupler 908-1 on receipt of an unload command, when an load signal is applied to the input 901a, the counter 906a proceeds to count up until the output of the fourth stage of the counter goes high. The output of inverter 913 then goes low inhibiting, via the AND gate 912, further pulse from being counted. It will be seen that the output of the inverter 913 is applied to the emitter of a driver transistor 914 which, when the output of the inverter 913 goes low it de-energizes a relay coil 916 which controls the contact 905. Thus with a constant unload signal for a preset time the cooling demand contact 905A will open to indicate to the heat pump that cooling is no longer required. The polarity of the output voltage across output terminals 904 is determined by the states of drive transistors 917, 918. When transistor 917 is on and 918 is off, the polarity of the voltage across terminals 904 is negative to positive (in the left-right sense of the Figure) indicating that loading up is required, while if transistor 917 is off and transistor 918 is on, the reverse polarity is produced, indicating loading up as being required.

An AND gate 919 combines the outputs of the counter 906a and the output of the inverter 913b, associated with counter 906b so that its output is high when counter 906a has reached its final count but counter 906b has not. This AND-ed output is inverted by an inverter 920 and applied to one input of an AND gate 921 whose other input is high when the optocoupler 908-2 is activated (i.e. there is an unload command on the cooling channel 901a). The output of this AND gate is then OR-ed with the output of a further AND gate 922 by means of diodes 923 and 924 and applied to the transistor 917, as a result of which the transistor 917 is on whenever the output of AND gate 921 or that of AND gate 922 is on. The AND gate 922 receives as one input the output of the gate 919, described above and, as its other input, the output of the optocoupler in the channel 901b which is actuated when there is an unload signal present on the heating channel.

The output of the AND gate 919 is also applied to one of the inputs of a further AND gate 925 whose other input is connected to the optocoupler in the heating section which is activated when a load signal is applied to that section and the output of this AND gate 925 is OR-ed with the load signal from photocoupler 908-1 to the input of transistor 918.

As a result of the above, a load/unload signal is derived at the terminals 904 as follows:-

If 916A cooling demand relay is energised then the cooling signal at 901A is duplicated at 904. If 916B heating demand relay is energised but 916A cooling demand relay is de-energised then the heating signal at 901B is duplicated at 904.

When both input channels 901a and 901b are simultaneously providing loading signals then the unit goes into the heat recovery mode during which both relay contacts 905a and 905b are closed.

The unit primary control to terminal 904 is then duplicated by the cooling signal from 901a.

Only an unload signal from 901b will energise relay 926 which in turn closes contact 927 which opens the heat rejection valve. If this heating unload signal from 901b is maintained for a specific time period then relay 928 is deenergised and the unit mode reverts to cooling.

The system controller cooling section may be provided with controls for cooling set point, dead band and timer, auto, load, and unload and a seven segment controlled sequence No. display. The heating section may be provided with controls for heating set point, dead band and timer, auto, load, and unload and a seven segment controlled sequence No. display auxiliary heating section delay timer and "called" and "on" lights. There may also be a common set of lead/lag plugs and sockets. Thus the heat pump unit system controller transmits two signals, which can each be "load", "balance" or "unload", for cooling and heating, respectively. As there are two signals it should be noted that different units can be the target unit, one for the cooling and one for the heating signals. Each heat pump unit is fitted with an interpreter circuit card which responds as described below. Each interpreter card receives two signals and determines the mode of operation (cooling, heat recovery or heat pump) its associated heat pump unit should adopt to meet the heating and cooling loads. The interpreter card has three output relays one designated CTH, one HTH and one HR. These should be connected into the heat pump unit to represent the master heating and cooling thermostats, with HR controlling the heat rejection valve. Initially both CTH and HTH relays are de-energised so that the heat pump unit is shutdown. If it is assumed that there is no demand for heating and on a rise of mixed chilled liquid temperature the cooling section of the system controller would send a cooling load signal to the lead (target) heat pump unit. On receipt of a cooling load signal the interpreter card energizes CTH to put the heat pump unit into the cooling mode. The cooling signal is then transmitted to the interface card which interacts with the heat pump units own electronic capacity controls in the same manner as described earlier. If the heating section of the system controller at a later date sends a load signal to the same heat pump unit the interpreter card HTH relay will energize. With the CTH and HTH relays energized the unit will change to the heat recovery mode. The interpreter card will still transmit to the interface card the signal from the cooling section of the system controller.

If in this mode the mixed hot water temperature rises to give an unload signal from the heating section of the sequence controller the target unit interpreter card HR relay is energised and opens the heat rejection valve which bypasses superheated refrigerant into the air-cooled condenser reducing the heating load on the water-cooled condenser, maintaining the required common mixed leaving hot water temperature. When the mixed hot water temperature returns into the temperature deadband the relay HR is deenergised and the heat recovery valve closes.

If a section of the system controller sends an unload or mixed unload and balance signal to the target unit, the interpreter card will accumulate the unload time until it is clear that no further duty is required from the unit due to this section of the system controller. However, in the heat recovery mode a continuous heating unload signal i.e. continuous heat rejection and not an accumulated unload and balance signal, will be used to determine that no further heat recovery is required. At this point the interpreter card will de-energize its associated heating or cooling relay (CTH or HTH). If the unload/balance sequence is broken by a load signal the accumulated unload time is reset to zero. If in the case outlined above with the target unit running in heat recovery the unit receives an accumulated cooling unload signal for x minutes the interpreter card CTH relay will de-energize changing the unit mode to heatpump. The interpreter card will now transmit to the interface card the signal from the heating section of the system controller so that unit capacity is controlled by the hot liquid temperature.

The strategy outlined above means that the system controller will decide which mode each of the heat pump units should adopt based on the mixed chilled and hot leaving temperatures and transmit the appropriate load and unload signals to each heat pump unit. The strategy of ensuring the least number of units are running is followed, along with selecting the most efficient mode for each heat pump unit to adopt. For instance the system controller would not select one unit to run in cooling whilst asking another to run in heating. However, the system controller can select the Lag running unit to run in cooling or heat pump to top up the lead units which could be running in heat recovery.

The heating and cooling section of the system controller each have terminals for remote shutdown contacts. Opening the cooling shutdown contact will remove the cooling demand and send an unload cooling signal. Opening the heating shutdown contact will remove the heating demand and send an unload heating signal. Thus these contacts can be used by thermostats or a Building Management System (BMS )to select cooling only, heating only or automatic control from the commander or by a time clock to shut down the units. The cooling and heating section of the system controller will each accept an EMS interface card for leaving water temperature reset.

If both shutdown contacts are not used as master heating/cooling contacts and both hot and cold pumps are left on, the system controller will select unit modes and dictate unit capacity based on water temperature (building load) without the need for further customer supplied controls such as master cooling or heating thermostats. From the above it will be appreciated that each of the heat pump units 1-4 can simultaneously make a contribution to the cooling and heating demands and respond independently to load up and unload commands in respect of heating and cooling capacity with the facility, where the cooling demand is in excess of the heating demand, of rejecting the excess heat to outside air via the air/refrigerant heat exchanger. Furthermore, each of the system controller sections can operate autonomously, effectively "unaware" of the demand imposed by the other section. Thus, for example, suppose one heat pump is currently assigned to satisfying a cooling demand by the cooling section of the system controller and the heating section of the system controller sends a signal demanding it to load up in respect of heating capacity. The unit will, of course, only be able to respond to this demand to the extent that heat is available from the cooling section of the heat pump unit and this will limit the contribution which it can make to elevating the hot-water delivery temperature. If this limited contribution is insufficient to meet the hot water demand temperature of the heating section of the system controller 10', this section will simply send a load-up signal to the next available heat-pump. Obviously as with the arrangement of Figures 1, 2, 3, 4 and 5 it is possible to provide for a bivalent heat source to be activated when the heat pump units are all fully loaded up in respect of heating capacity but the hot water delivery temperature is not being attained.

From the above description, it will be apparent that the illustrated embodiments of the invention can provide a number of advantages, namely that:-

1. A multiple unit 4-pipe heat pump system can be implemented using a system controller which requires only one mixed hot-water exit temperature sensor and only one cold-water exit temperature sensor.

2. A multiple heat pump system can be provided which eliminates the necessity to resort to series flow operation of a number of water chillers/heaters on the same system.

3. A system is provided which economically provides optimum load build up of a number of either cooling or heating units installed in parallel and allows the heating and cooling demands to be treated separately by the system controller. Furthermore each heat pump can make an independently controllable contribution to the heating and cooling demands.

4. The system provides load compensation for water flow variation within each unit or breakdown of a unit to be achieved.

5. A number of units can be operated in parallel while maintaining the operation of each unit within its own operating limitations in either heating or cooling modes.

6. The system can adequately compensate for any variation of individual unit performance when a number of units are installed and operated in parallel. This may permit units of different types to be used in combination with one another, connected in parallel and used for heating/and or cooling applications.

7. A system having a single control module is provided which economically operates a number of heating/cooling units installed in parallel where the demanded common mixed water exit temperature may be varied either manually or by the influence of a set-point signal from a building management system. Furthermore different types of units such as chillers and heating/cooling changeover units may be incorporated in one system.

8. A number of heat pumps can be operated in parallel such that when in a heating mode individual unit defrosting of outdoor coils can be achieved, the System Controller compensating for the additional load imposed by initiating further heat loading of other units not on defrost in the same parallel circuit.

9. The system controller can handle a heating or cooling control signal from a system such as a Building Management System as an offset to its own heating and cooling set-point temperatures and handle this offset in a "safe" manner (i.e. it that it will tend to err, if at all, in the direction of minimising energy consumption). This control signal could be a proportional signal indicating a demanded supply temperature or could be an up/down signal indicating that more or less cooling, or a mixture of both is required.

## Claims

1. A heating and/or cooling system including a system controller (10) and at least two heating and/or cooling sources (2) for heating or cooling working medium flowing around a circuit, in response to a demand on the system for heating or cooling, characterised in that the heating and/or cooling sources (2) are heat pumps each comprising a refrigerant circuit and having associated with it a controller (5-1 .. 5-N) for controlling the operation of the refrigeration circuit, wherein the heat pumps (2) have working medium outlets connected in flow parallel to a delivery conduit (6) for the heated or cooled working medium and the system controller is arranged to generate command signals to the heat pump controllers (5-1 .. 5-N) to request an increase or decrease in heating and/or cooling power depending on the temperature of mixed working medium in the delivery conduit (6) to maintain a demanded value of the temperature of said mixed working medium, the controller (5-1 .. 5-N) of each heat pump (2) being operative to control the heating and/or cooling power thereof and being responsive to the requests of the system controller (10) to change the heating and/or cooling power if the operating condition of the heat pump (2) permits and the system controller (10) being operative sequentially to request energisation or de-energisation of the heat pumps (2) such that not more than the minimum number of heat pumps (2) which can satisfy the heating and/or cooling demand are energised.

2. A heating and/or cooling system according to claim 1 wherein the system controller (10) determines whether the heating and/or cooling capacity of the heat pumps (2) should be changed by comparing the temperature of mixed working fluid in said conduit (6) with preset reference values.

3. A heating and/or cooling system according to any one of the preceding claims wherein the system controller (10) responds to a change in demand on the system only when the change in demand has persisted for a predetermined time.

4. A heating and/or cooling system according to any one of the preceding claims wherein the heat pumps (2) include multi-stage heat pumps.

5. A heating and/or cooling system according to any one of the preceding claims wherein the system controller (10) is arranged so as to control the heat pumps (2) such that less than two heat pumps are, at any time, operating at part load capacity.

6. A heating and/or cooling systems according to any one of the preceding claims wherein a further heating source (800) is provided under the command of the system controller (10) in order to provide supplementary heating.

7. A heating and/or cooling system according to any one of the preceding claims wherein at least one of the heat pumps (2) is capable of heating, cooling and heat rejection and is connected by respective outlets to a hot working medium circuit and a cold working medium circuit, so that the system can satisfy simultaneous heating and cooling demands, the system controller (10) being arranged to generate command signals for the heat pumps to instruct an increase or decrease in heating capacity and/or cooling capacity depending on the temperature of the mixed working medium from the parallel hot outlets and mixed working medium from the parallel cold outlets respectively.

**Revendications**

1. Système de chauffage et/ou de refroidissement comprenant un contrôleur de système (10) et au moins deux sources de chauffage et/ou de refroidissement (2) afin de chauffer ou de refroidir un fluide de travail s'écoulant à travers un circuit, en réponse à une demande de chauffage ou de refroidissement adressée au système, caractérisé en ce que les sources de chauffage et/ou de refroidissement (2) sont des pompes à chaleur comportant chacune un circuit de réfrigérant et possédant, associé à celui-ci, un contrôleur (5-1...5-N) afin de commander le fonctionnement du circuit de réfrigération, dans lequel les pompes à chaleur (2) possèdent des orifices de sortie de fluide de travail connectés en écoulement parallèle à un conduit de délivrance (6) pour le fluide de travail chauffé ou refroidi et le contrôleur de système est agencé pour générer des signaux de commande aux contrôleurs de pompe à chaleur (5-1... 5-N) pour demander un accroissement ou une diminution de la puissance de chauffage et/ou de refroidissement en fonction de la température du fluide de travail mélangé dans le conduit de délivrance (6) pour maintenir une valeur demandée de la température dudit fluide de travail mélangé, le contrôleur (5-1... 5-N) de chaque pompe à chaleur (2) opérant pour commander la puissance de chauffage et/ou de refroidissement de celle-ci et étant sensible aux demandes du contrôleur de système (10) pour modifier la puissance de chauffage et/ou de refroidissement si l'état de fonctionnement de la pompe à chaleur (2) le permet et le contrôleur de système (10) opérant séquentiellement pour demander une excitation ou une désexcitation des pompes à chaleur (2) de telle sorte que pas plus du nombre minimum de pompes à chaleur (2) pouvant satisfaire la demande de chauffage et/ou de refroidissement sont excitées.

2. Système de chauffage et/ou de refroidissement selon la revendication 1, dans lequel le contrôleur de système (10) détermine si la capacité de chauffage et/ou de refroidissement des pompes à chaleur (2) doit être modifiée en comparant la température du fluide de travail mélangé dans ledit conduit (6) à des valeurs de référence prédéterminées.

3. Système de chauffage et/ou de refroidissement selon l'une quelconque des revendications précédentes, dans lequel le contrôleur de système (10) répond à une variation de la demande adressée au système uniquement lorsque la variation de la demande a été maintenue pendant un temps prédéterminé.

4. Système de chauffage et/ou de refroidissement selon l'une quelconque des revendications précédentes, dans lequel les pompes à chaleur (2) comprennent des pompes à chaleur à plusieurs étages.

5. Système de chauffage et/ou de refroidissement selon l'une quelconque des revendications précédentes, dans lequel le contrôleur de système (10) est agencé de manière à commander les pompes à chaleur (2) de telle sorte que moins de deux pompes à chaleur sont, à un instant quelconque, en fonctionnement à capacité de charge partielle.

6. Système de chauffage et/ ou de refroidissement selon l'une quelconque des revendications précédentes, dans lequel une autre source de chauffage (800) est prévue sous la commande du contrôleur de système (10) afin de fournir un chauffage supplémentaire.

7. Système de chauffage et/ou de refroidissement selon l'une quelconque des revendications précédentes, dans lequel au moins une des pompes à chaleur (2) est apte à chauffer, refroidir et évacuer de la chaleur et est reliée par des orifices de sortie respectifs à un circuit de fluide de travail chaud et à un circuit de fluide de travail froid, de sorte que le système peut satisfaire simultanément des demandes de chauffage et de refroidissement, le contrôleur de système (10) étant agencé pour générer des signaux de commande pour les pompes à chaleur pour ordonner un accroissement ou une diminution de la capacité de chauffage et/ou de la capacité de refroidissement en fonction de la température du fluide de travail mélangé provenant des orifices de sortie chauds parallèles et du fluide de travail mélangé provenant des orifices de sortie froids parallèles respectivement.

**Patentansprüche**

1. Heiz- und/oder Kühlsystem mit einem Systemregler (10) und mindestens zwei Heiz- und/oder Kühlquellen (2) zum Heizen oder Kühlen eines Arbeitsmediums, das entsprechend einem Bedarf des Systems zum Heizen oder Kühlen in einem Kreislauf umläuft, **dadurch gekennzeichnet,** daß die Heiz- und/oder Kühlquellen (2) Wärmepumpen sind, von welchen jede einen Kühlmittelkreislauf aufweist und diesem zugeordnet einen Regler (5-1... 5-N) zur Steuerung des Betriebs des Kühlmittelkreislaufes besitzt, wobei die Wärmepumpen (2) Arbeitsmedium-Auslässe besitzen, die an eine Zufuhrleitung (6) für das erhitzte oder gekühlte Arbeitsmedium strömungsmittelmäßig parallel angeschlossen sind, und der Systemregler angeordnet ist zum Erzeugen von Befehlssignalen zu den Wärmepumpenreglern (5-1...5-N) zum Abfragen einer Zu- oder Abnahme der Heizungs- und/oder Kühlleistung in Abhängigkeit von der Temperatur gemischten Arbeitsmediums in der Zufuhrrohrleitung (6) zum Aufrechterhalten eines beanspruchten Wertes der Temperatur des gemischten Arbeitsmediums, wobei der Regler (5-1...5-N) jeder Wärmepumpe (2) zum Steuern ihrer Heiz- und/oder Kühlleistung wirksam und auf die Anforderungen des Systemreglers (10) empfindlich ist, um die Heiz- und/oder Kühlleistung zu verändern, wenn die Betriebsbedingung der Wärmepumpe (2) es erlaubt und der Systemregler (10) aufeinanderfolgend wirksam ist, um eine Erregung oder ein Abschalten der Erregung der Wärmepumpen (2) anzufordern, so daß nicht mehr als die minimale Anzahl Wärmepumpen (2), welche den Heiz- und/oder Kühlbedarf befriedigen, erregt werden.

2. Heiz- und/oder Kühlsystem nach Anspruch 1, **dadurch gekennzeichnet,** daß der Systemregler (10) bestimmt, ob die Heiz- und/oder Kühlkapazität der Wärmepumpen (2) durch Vergleich der Temperatur des gemischten Arbeitsströmungsmittels in der Leitung (6) mit vorgewählten Bezugswerten verändert werden soll.

3. Heiz- und/oder Kühlsystem nach einem der vorhergehenden Ansprüche, **dadurch gekennzeichnet,** daß der Systemregler (10) auf eine Änderung des Bedarfs des Systems nur dann anspricht, wenn die Änderung des Bedarfs während einer vorgegebenen Zeit fortbestanden hat.

4. Heiz- und/oder Kühlsystem nach einem der vorhergehenden Ansprüche, **dadurch gekennzeichnet,** daß die Wärmepumpen (2) mehrstufige Wärmepumpen enthalten.

5. Heiz- und/oder Kühlsystem nach einem der vorhergehenden Ansprüche, **dadurch gekennzeichnet,** daß der Systemregler (10) zur Steuerung der Wärmepumpen (2) angeordnet ist, so daß weniger als zwei Wärmepumpen zu jeder Zeit bei Teillastkapazität arbeiten.

6. Heiz- und/oder Kühlsystem nach einem der vorhergehenden Ansprüche, **dadurch gekennzeichnet,** daß eine weitere Heizquelle (800) unter dem Befehl des Systemreglers (10) vorgesehen ist, um eine Zusatzheizung zu liefern.

7. Heiz- und/oder Kühlsystem nach einem der vorhergehenden Ansprüche, **dadurch gekennzeichnet,** daß mindestens eine der Wärmepumpen (2) zur Heizung, Kühlung und Wärmezurückweisung geeignet und durch jeweilige Auslässe mit einem Schaltkreis heißen Arbeitsmediums und einem Schaltkreis kalten Arbeitsmediums verbunden ist, so daß das System gleichzeitig Heiz- und Kühlbedürfnisse befriedigen kann, wobei der Systemregler (10) angeordnet ist zum Erzeugen von Befehlssignalen für die Wärmepumpen zum Angeben einer Zu- oder Abnahme der Temperatur des gemischten Arbeitsmediums jeweils von den parallelen heißen Auslässen und des gemischten Arbeitsmediums von den kalten Auslässen.

*Fig.1.*

DEMAND SIGNAL FROM BUILDING MANAGEMENT SYSTEM.

SYSTEM CONTROLLER

SUPPLY WATER TO DISTRIBUTION NETWORK

RETURN WATER

UNIT 1
UNIT 2
UNIT 3
UNIT N

EP 0 204 521 B1

Fig. 2.

MODE AND SET POINT DISCRIMINATOR    TIME CLOCK    LOAD ANALYSIS MODULE    SEQUENCE TIMING AND PREDICTOR    LOGIC CONVERTER    OUTPUT DRIVE    INTERFACE CARD

Fig.2A.

HEATING SEQUENCE COMMANDER

1
2
n

1
2
n

BIVALENT HEAT 800

10'

COOLING SEQUENCE COMMANDER

1
2
n

1
2
n

UNIT n.

HEAT REJECTION VALVE

INTERPRETER

INTERFACE

MODES

EP 0 204 521 B1

Fig.3.

100

11

SET
POINT
COOLING

IC4    105

101 C

TO 300
(FIG.3B.)

RL2-2

106

107

108

COOLING
(5)

SET
POINT
HEATING

IC4    105

108

102

RL2-1    RL1

200

101H

106

107

HEATING
(4)

Fig.3A.

Fig. 3B.

Fig.3C.

*Fig.3D.*

OUTPUT DRIVE (11)

EP 0 204 521 B1

Fig.3E.

Fig.3F.

EP 0 204 521 B1

Fig. 4.

700

# Fig.5.

# Fig. 6.

*Fig. 7.*

EP 0 204 521 B1